# EUROPEAN PATENT APPLICATION

(11) **EP 4 646 020 A1**
(43) Date of publication of application: **05.11.2025**
(21) Application number: 22969957.4
(22) Date of filing: 26.12.2022
(51) Int. Cl.: H04W 88/04, H04W 36/08, H04W 76/50, H04W 4/90

(54) **TERMINAL DEVICE, WIRELESS COMMUNICATION SYSTEM, AND RELAY METHOD**

(71) Applicant: MITSUBISHI ELECTRIC CORPORATION, Chiyoda-ku Tokyo 100-8310 (JP)
(72) Inventor: IWAYAMA Naofumi, Tokyo 100-8310 (JP); HASEGAWA Fumiki, Tokyo 100-8310 (JP); MAKINO Shinya, Tokyo 100-8310 (JP); ANDO Nobuhiko, Tokyo 100-8310 (JP); SUNOUCHI Akira, Tokyo 105-5129 (JP)
(74) Representative: Pfenning, Meinig & Partner mbB
(86) International application number: PCT/JP2022/047964
(87) International publication number: WO 2024/142163

(57) **Abstract**

A relay device (110#) includes: a terminal-side communication unit (111#) that relays communication of a UE (110) to a first network that is unable to use an emergency service but supports the fallback of the emergency service, or a second network to which the emergency service falls back; and a protocol processing unit (113#) that hands over the communication of the UE (110) to the second network when a request to connect to the emergency service is received from the UE (110) while the communication of the UE (110) is being relayed to the first network.

## Description

### TECHNICAL FIELD

The disclosure relates to a terminal device, a wireless communication system, and a relaying method.

### BACKGROUND ART

Third Generation Partnership Project (3GPP), which is a standardization body for mobile communication systems, is considering supporting services or applications using Sidelink (SL) communication (also known as PC5 communication) in an Evolved Packet System (EPS) and a 5G core system of fifth-generation (5G) wireless access systems. In SL communication, communication takes place between terminals. Examples of services using SL communication include vehicle-to-everything (V2X) services and proximity services. For SL communication, not only direct communication between terminals but also communication between mobile terminal devices (hereinafter referred to as User Equipment (UE)) and networks (NW) through relays has been proposed (for example, refers to NPL 1). Hereinafter, a UE implementing a relay between a UE and a NW may be referred to as a "U2N relay."

Here, "3GPP" is a registered trademark.

3GPP defines a U2N relay function that provides relay connection for other terminals outside cell coverage to an Evolved Universal Terrestrial Radio Access Network (E-UTRAN) or a 5G network via Sidelink communication in order to extend cell coverage by using Sidelink communication.

### PRIOR ART REFERENCE

### PATENT REFERENCE

Non-Patent Literature 1: 3GPP TR 38.836 V17.0.0

### SUMMARY OF THE INVENTION

### PROBLEM TO BE SOLVED BY THE INVENTION

Although an emergency service is specified in Long Term Evolution (LTE) and 5G, the current U2N relay standards do not disclose any mechanism for fallback and handover to an E-UTRAN or 5G network that supports the emergency service in use of the emergency service.

Accordingly, an object of one or more aspects of the disclosure is to implement communication using an emergency service between a base station and a network that do not support the emergency service but do support fallback of the emergency service, and a terminal device via a U2N relay.

### MEANS OF SOLVING THE PROBLEM

A terminal device according to a first aspect of the disclosure includes: a communication unit configured to relay communication of a relay target device to a first network or a second network, the relay target device being another terminal device, the first network being unable to use an emergency service but supporting fallback of the emergency service, the second network being a destination of fallback of the emergency service; and a protocol processing unit configured to hand over the communication of the relay target device to the second network when a request to connect to the emergency service is received from the relay target device while the communication of the relay target device is being relayed to the first network.

A terminal device according to a second aspect of the disclosure includes: a communication unit configured to receive a Relay Discovery Solicitation message or a Relay Discovery Response message including information indicating that an emergency service is available when the emergency service is available in a network to which a relay device is connected, and receive a Relay Discovery Solicitation message or a Relay Discovery Response message including information indicating that handover is to be performed to use the emergency service when the emergency service is unavailable in the network to which the relay device is connected and fallback of the emergency service is possible, the relay device being another terminal device performing relaying; and a protocol processing unit configured to receive the emergency service by being relayed to the network to which the relay device is connected when the emergency service is available in the network to which the relay device is connected and receive the emergency service by being relayed to another network by fallback of the emergency service when the fallback of the emergency service is possible in the network to which the relay device is connected.

A wireless communication system according to an aspect of the disclosure includes: a first base station configured to be unable to use emergency service but support fallback of the emergency service, the first base station being included in a first network; a second base station included in a second network to which the emergency service falls back; and a terminal device configured to perform relaying to the first base station and the second base station. The terminal device comprises: a communication unit configured to relay communication of a relay target device to the first base station or the second base station, the relay target device being another terminal device; and a protocol processing unit configured to hand over the communication of the relay target device to the second network when a request to connect to the emergency service is received from the relay target device via the communication unit while the communication of the relay target device is being relayed to the first network.

A relaying method according to the first aspect of the disclosure includes: receiving a request from a relay target device to connect to an emergency service when communication of the relay target device is being relayed to a first network, the first network being unable to use the emergency service but supporting fallback to the emergency service; and handing over the communication of the relay target device to a second network to which the emergency service falls back.

A relaying method according to the second aspect includes: receiving a Relay Discovery Solicitation message or a Relay Discovery Response message including information indicating that an emergency service is available when the emergency service is available in a network to which a relay device is connected, the relay device being another terminal device performing relaying; receiving a Relay Discovery Solicitation message or a Relay Discovery Response message including information indicating that handover is necessary to use the emergency service when the emergency service is unavailable in the network to which the relay device is connected and fallback of the emergency service is possible; receiving the emergency service by being relayed to the network to which the relay device is connected when the emergency service is available in the network to which the relay device is connected; and receiving the emergency service by being relayed to another network by fallback of the emergency service when the fallback of the emergency service is possible in the network to which the relay device is connected.

### EFFECTS OF THE INVENTION

According to one or more aspects of the disclosure, it is possible to implement communication using an emergency service between a base station and a network that do not support the emergency service but do support fallback of the emergency service, and a terminal device via a U2N relay.

### BRIEF DESCRIPTION OF THE DRAWINGS

FIG. 1 is a block diagram schematically illustrating a configuration of a wireless communication system according to a first embodiment.
FIG. 2 is a block diagram schematically illustrating a configuration of a UE.
FIGS. 3A and 3B are block diagrams illustrating hardware configuration examples.
FIG. 4 is a block diagram schematically illustrating a configuration of a base station.
FIG. 5 is a block diagram schematically illustrating a configuration of a 5GC host device.
FIG. 6 is a block diagram schematically illustrating a configuration of an EPC host device.
FIG. 7 is a sequence diagram illustrating the steps for providing an emergency service in the first embodiment.
FIG. 8 is a block diagram schematically illustrating a configuration of a wireless communication system according to a second embodiment.
FIG. 9 is a sequence diagram illustrating the procedures for providing an emergency service in the second embodiment.

### MODE FOR CARRYING OUT THE INVENTION

### FIRST EMBODIMENT

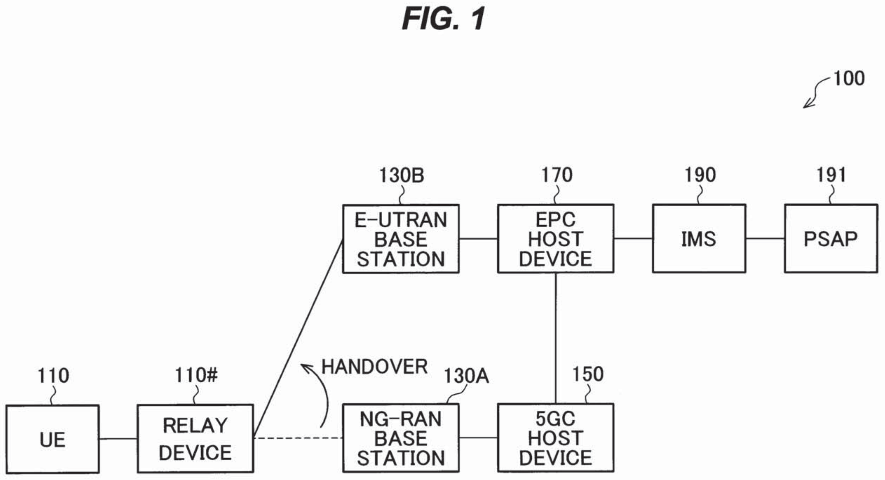

FIG. 1 is a block diagram schematically illustrating a configuration of a wireless communication system 100 according to the first embodiment.

The wireless communication system 100 includes a UE 110 as a terminal device; a relay device 110#; a Next-Generation Radio Access Network (NG-RAN) base station 130A as a base station supporting an NG-RAN; a Fifth Generation Core (5GC) host device 150 as a host device supporting a 5GC; an E-UTRAN base station 130B as a base station supporting an E-UTRAN; and an Evolved Packet Core (EPC) host device 170 as a host device supporting a EPC.

The wireless communication system 100 is a system for receiving an emergency service from a Public Safety Answering Point (PSAP) 191 via an Internet Protocol Multimedia Subsystem (TMS) 190.

Here, the relay device 110# is a U2N relay.

Although the NG-RAN base station 130A and the 5GC host device 150 do not support an emergency service but connect to an emergency service via the EPC host device 170 supporting the emergency service.

The first embodiment describes an example of supporting fallback of an emergency service with a configuration such as that described above.

The UE 110 can wirelessly communicate with the NG-RAN base station 130A and the E-UTRAN base station 130B to transmit and receive signals through the wireless communication. The UE 110 can also communicate between UEs 110 through SL communication and can also communicate via the relay device 110#. The UE 110 that is relayed by the relay device 110# is also referred to as "relay target device."

The NG-RAN base station 130A comprises a wireless access network.

If the wireless access network is a 5G system discussed in 3GPP, the wireless access network is referred to as "NG-RAN." In this case, the NG-RAN base station 130A is referred to as "NG-RAN Node B (gNB)." The core network is referred to as "5G Core."

The E-UTRAN base station 130B comprises a wireless access network.

If the wireless access network is an LTE system discussed in 3GPP, the wireless access network is referred to as "E-UTRAN." In this case, the E-UTRAN base station 130B is referred to as "E-UTRAN Node B (eNB)."

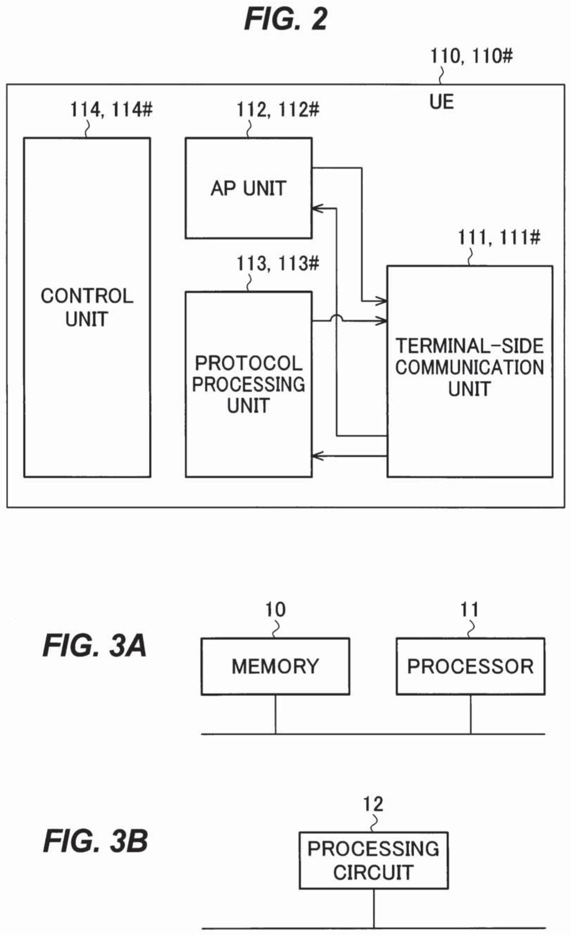

FIG. 2 is a block diagram schematically illustrating a configuration of the UE 110.

The UE 110 includes a terminal-side communication unit 111, an application (AP) unit 112, a protocol processing unit 113, and a control unit 114.

The transmission processing by the UE 110 will now be explained.

The control data from the protocol processing unit 113 or the user data from the AP unit 112 is transmitted to the terminal-side communication unit 111.

The terminal-side communication unit 111 converts data to a transmission signal to be wirelessly communicated and transmits the transmission signal to the destination with one or more antennas.

Next, the reception processing by the UE 110 will be explained.

The terminal-side communication unit 111 receives a radio signal from a transmission source as a reception signal with one or more antennas and generates control data or user data from the reception signal. The terminal-side communication unit 111 then transmits the control data to the protocol processing unit 113 and the user data to the AP unit 112.

The above series of processing by the UE 110 is controlled by the control unit 114. Although not illustrated, the control unit 114 is connected to the terminal-side communications unit 111, the AP unit 112, and the protocol processing unit 113.

The number of antennas used by the UE 110 for transmission and reception may be the same or different.

The terminal-side communications unit 111 functions as a communication unit that receives a Relay Discovery Solicitation message or a Relay Discovery Response message containing information indicating that an emergency service is available when the emergency service is available in the network to which the relay device 110#, which is another UE performing relaying, is connected. When an emergency service is unavailable in the network to which the relay device 110# is connected, but fallback of the emergency service is possible, the terminal-side communication unit 111 functions as a communication unit that receives a Relay Discovery Solicitation message or a Relay Discovery Response message containing information indicating that handover must be performed to use the emergency service.

When the emergency service is available in the network to which the relay device 110# is connected, the protocol processing unit 113 receives the emergency service by having it relayed to the network to which the relay device 110# is connected.

When fallback of the emergency service is possible in the network to which the relay device 110# is connected, the protocol processing unit 113 receives the emergency service by having it relayed to another network through fallback of the emergency service.

The protocol processing unit 113 adds information indicating that the emergency service is to be received to a Relay Discovery Request message. In this way, the UE 110 can notify the relay device 110# that the emergency service is to be received.

Some or all of the AP unit 112, the protocol processing unit 113, and the control unit 114 described above can be implemented by, for example, a memory 10 and a processor 11 such as a central processing unit (CPU) that executes programs stored in the memory 10, as illustrated in FIG. 3A. Such programs may be provided over a network or may be recorded and provided on a recording medium. That is, such programs may be provided, for example, as a program product.

Some or all of the AP unit 112, the protocol processing unit 113, and the control unit 114 can also be implemented by, for example, a single circuit, a composite circuit, a processor operated by a program, a parallel processor operated by a program, a processing circuit 12 such as an application specific integrated circuit (ASIC) or a field programmable gate array (FPGA), as illustrated in FIG. 3B.

As described above, the AP unit 112, the protocol processing unit 113, and the control unit 114 can be implemented by processing circuitry.

The terminal-side communication unit 111 can be implemented by a wireless communication interface, which is an interface for wireless communication.

One of multiple UEs 110 functions as a U2N relay to serve as the relay device 110#. As illustrated in FIG. 2, the relay device 110# includes a terminal-side communication unit 111#, an AP unit 112#, a protocol processing unit 113#, and a control unit 114#. The configuration of the relay device 110# is the same as that of the UE 110. The processing by the relay device 110# should be performed according to the provisions in 3GPP.

The terminal-side communication unit 111# functions as a communication unit that relays the communication of the relay target device, or another EU 110, to a first network that cannot use the emergency service but supports fallback of the emergency service or a second network to which the emergency service falls back. In the first embodiment, the first network is an NG-RAN, and the second network is an E-UTRAN. In the first embodiment, the NG-RAN base station 130A is also referred to as "first base station," and the E-UTRAN base station 130B is also referred to as "second base station."

When the protocol processing unit 113# receives a request for connection to the emergency service from the relay target device while the communication of the relay target device is being relayed to the first network, the protocol processing unit 113# hands over the communication of the relay target device to the second network.

Since the NG-RAN base station 130A corresponding to a 5G wireless access network and the E-UTRAN base station 130B corresponding to an LTE wireless access network can have the same configuration, hereinafter, their configuration will be described while referring to each of them as "base station 130."

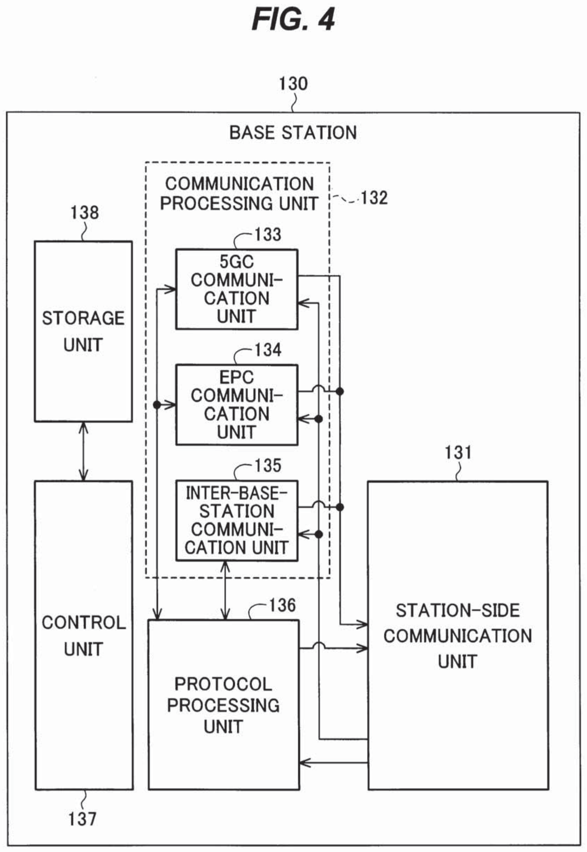

FIG. 4 is a block diagram schematically illustrating a configuration of the base station 130.

The base station 130 includes a station-side communication unit 131, a communication processing unit 132, a protocol processing unit 136, a control unit 137, and a storage unit 138.

The communication processing unit 132 includes a 5GC communication unit 133 that transmits and receives data to and from a 5GC, an EPC communication unit 134 that transmits and receives data to and from an EPC such as a Mobility Management Entity (MME), and an inter-base-station communication unit 135 that transmits and receives data to and from other base stations. The 5GC communication unit 133, the EPC communication unit 134, and the inter-base-station communication unit 135 each passes information to and receives information from the protocol processing unit 136.

The transmission processing by the base station 130 will now be explained.

Control data from the protocol processing unit 136 or user data or control data from the 5GC communication unit 133, the EPC communication unit 134, or the inter-base-station communication unit 135 is given to the station-side communication unit 131.

The station-side communication unit 131 converts the data to a transmission signal to be wirelessly communicated and transmits the transmission signal to the destination with one or more antennas.

The reception processing by the base station 130 will now be explained.

The station-side communication unit 131 receives a radio signal as a reception signal from a transmission source with one or more antennas and generates control data or user data from the reception signal. The station-side communication unit 131 then transmits the control data to the protocol processing unit 136, the 5GC communication unit 133, the EPC communication unit 134, or the inter-base-station communication unit 135 and transmits the user data to the 5GC communication unit 133, the EPC communication unit 134, or the inter-base-station communication unit 135.

The above series of processing by the base station 130 is controlled by the control unit 137. Although not illustrated, the control unit 137 is connected to the station-side communication unit 131, the communication processing unit 132, and the protocol processing unit 136.

The number of antennas used by the base station 130 for transmission and reception may be the same or different.

The number of antennas in the UE 110 and the number of antennas in the base station 130 may be the same or different.

The storage unit 138 stores programs and data necessary for processing by the base station 130.

Some or all of the communication processing unit 132, the protocol processing unit 136, and the control unit 137 described above can be implemented by, for example, the memory 10 and the processor 11 such as a CPU that executes a program stored in the memory 10, as illustrated in FIG. 3A. Such programs may be provided over a network or may be recorded and provided on a recording medium. That is, such programs may be provided, for example, as a program product.

Some or all of the communication processing unit 132, the protocol processing unit 136, and the control unit 137 can also be implemented by, for example, a single circuit, a composite circuit, a processor operated by a program, a parallel processor operated by a program, a processing circuit 12 such as an ASIC or an FPGA, as illustrated in FIG. 3B.

As described above, the communication processing unit 132, the protocol processing unit 136, and the control unit 137 can be implemented by processing circuitry.

The station-side communication unit 131 can be implemented by a wireless communication interface, which is an interface for wireless communication.

The storage unit 126 can be implemented by storage such as a nonvolatile memory, a hard disk drive (HDD) or a solid-state drive (SSD).

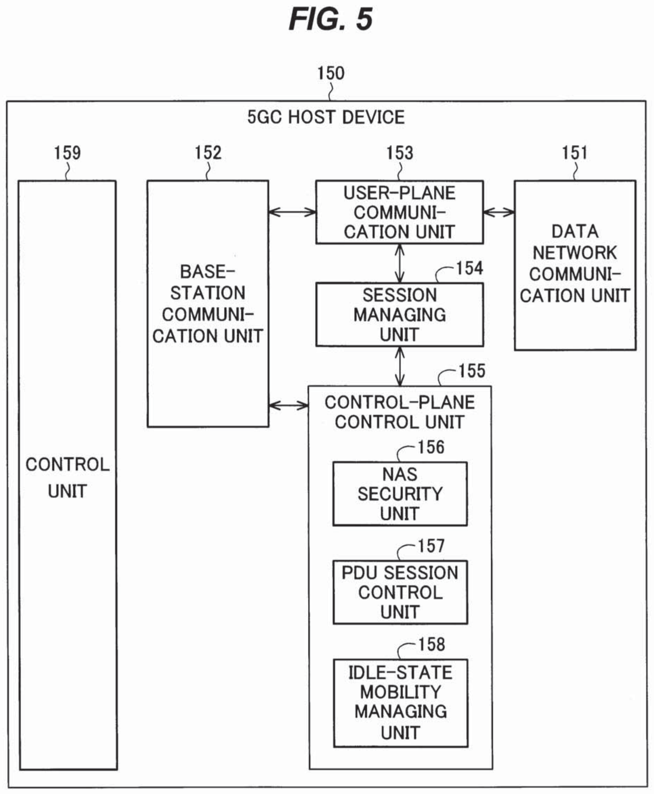

FIG. 5 is a block diagram schematically illustrating a configuration of the 5GC host device 150.

The 5GC host device 150 includes a data-network communication unit 151, a base-station communication unit 152, a user-plane communication unit 153, a session managing unit 154, a control-plane control unit 155, and a control unit 159.

The data-network communication unit 151 transmits and receives data between the 5GC host device 150 and a data network. Here, it is assumed that the data-network communication unit 151 is enabled to communicate with at least the EPC host device 170.

The base-station communication unit 152 transmits and receives data between the 5GC host device 150 and the NG-RAN base station 130A via an NG interface.

When the data received from the data network is user data, the user data is transmitted from the data-network communication unit 151 to the base-station communication unit 152 via the user-plane communication unit 153, and then from the base-station communication unit 152 to the NG-RAN base station 130A.

When the data received from NG-RAN base station 130 is user data, the user data is transmitted from the base-station communication unit 152 to the data-network communication unit 151 via the user-plane communication unit 153, and then from the data-network communication unit 151 to the data network.

When the data received from the data network is control data, the control data is transmitted from the data-network communication unit 151 to the session managing unit 154 via the user-plane communication unit 153. The session managing unit 154 transmits the control data to the control-plane control unit 155.

When the data received from the NG-RAN base station 130A is control data, the control data is transmitted from the base-station communication unit 152 to the control-plane control unit 155. The control-plane control unit 155 transmits the control data to the session managing unit 154.

The control-plane control unit 155 executes comprehensive processing for a control plane (hereinafter also referred to as "C-plane").

The control-plane control unit 155 includes a nonaccess stratum (NAS) security unit 156, a protocol data unit (PDU) session control unit 157, and an idle-state mobility managing unit 158.

The NAS security unit 156 is responsible for NAS message security, etc.

The PDU session control unit 157 manages PDU sessions between the UE 110 and the 5GC host device 150 and executes other processing.

The idle-state mobility managing unit 158 manages standby state mobility, generates and controls paging signals during a standby state, adds, deletes, updates, and searches tracking areas of at least one UE 110 under the control, manages a tracking area list, and executes other processing. The standby state is also referred to as "idle state," "RRC_IDLE state," or simply "idle."

The series of processing by the 5GC host device 150 is controlled by the control unit 159. Although not illustrated, the control unit 159 is connected to the data-network communication unit 151, the base-station communication unit 152, the user-plane communication unit 153, the session managing unit 154, and the control-plane control unit 155.

Some or all of the data-network communication unit 151, the base-station communication unit 152, the user-plane communication unit 153, the session managing unit 154, the control-plane control unit 155, and the control unit 159 can be implemented by, for example, the memory 10 and the processor 11 such as a CPU that executes a program stored in the memory 10, as illustrated in FIG. 3A. Such programs may be provided over a network or may be recorded and provided on a recording medium. That is, such programs may be provided, for example, as a program product.

Some or all of the data-network communication unit 151, the base-station communication unit 152, the user-plane communication unit 153, the session managing unit 154, the control-plane control unit 155, and the control unit 159 can also be implemented by, for example, a single circuit, a composite circuit, a processor ran by a program, a parallel processor ran by a program, a processing circuit 12 such as an ASIC or an FPGA, as illustrated in FIG. 3B.

As described above, the data-network communication unit 151, the base-station communication unit 152, the user-plane communication unit 153, the session managing unit 154, the control-plane control unit 155, and the control unit 159 can be implemented by processing circuitry.

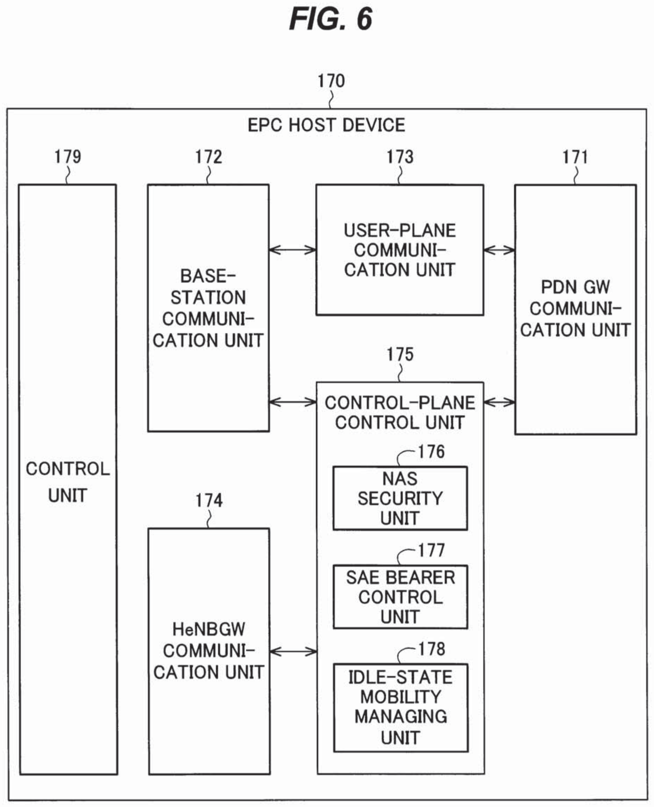

FIG. 6 is a block diagram schematically illustrating a configuration of the EPC host device 170.

The EPC host device 170 includes a packet data network gateway (PDN GW) communication unit 171, a base-station communication unit 172, a user-plane communication unit 173, a home-eNB gateway (HeNBGW) communication unit 174, a control-plane control unit 175, and a control unit 179.

The PDN GW communication unit 171 transmits and receives data between the EPC host device 170 and the PDN GW. Here, it is assumed that the PDN GW communication unit 171 is able to communicate with at least the 5GC host device 150.

The base-station communication unit 172 transmits and receives data between the EPC host device 170 and the E-UTRAN base station 130B via an S1 interface.

When the data received from the PDN GW is user data, the user data is transmitted from the PDN GW communication unit 171 to the base-station communication unit 172 via the user-plane communication unit 173 and then from the base-station communication unit 172 to the E-UTRAN base station 130B.

When the data received from E-UTRAN base station 130B is user data, the user data is transmitted from the base-station communication unit 172 to the PDN GW communication unit 171 via the user-plane communication unit 173 and then from the PDN GW communication unit 171 to the PDN GW.

When the data received from the PDN GW is control data, the control data is transmitted from the PDN GW communication unit 171 to the control-plane control unit 175.

When the data received from the E-UTRAN base station 130B is control data, the control data is transmitted from the base-station communication unit 172 to the control-plane control unit 175.

The HeNBGW communication unit 174 transmits and receives data between the EPC host device 170 and the HeNB GW. Control data from the HeNB GW received by the HeNBGW communication unit 174 is transmitted to the control-plane control unit 175. The HeNBGW communication unit 174 transmits the control data from the control-plane control unit 175 to the HeNB GW.

The control-plane control unit 175 performs comprehensive processing for the control plane.

The control-plane control unit 175 includes a NAS security unit 176, a system architecture evolution (SAE) bearer control unit 177, and an idle-state mobility managing unit 178.

The NAS security unit 176 is responsible for NAS message security, etc.

The SAE bearer control unit 177 manages a bearer of SAE and executes other processing.

The idle-state mobility managing unit 178 manages the mobility in an idle state (referred to as "LTE-IDLE state" or simply "idle"), which is a standby state, generates and controls paging signals during the standby state, adds, deletes, updates, and searches tracking areas of the UEs 110 under the control, manages a tracking area list, and executes other processing.

The EPC host device 170 distributes the paging signals to the E-UTRAN base station 130B. The EPC host device 170 is also responsible for mobility control in a standby state. The EPC host device 170 manages the tracking area list when a UE 110 is in a standby state and an active state. The EPC host device 170 initiates a paging protocol by transmitting a paging message to the cells belonging to the tracking area to which the UE 110 is registered. The CSG of the eNB connected to the EPC host device 170, CSG IDs, and a whitelist may be managed by the idle-state mobility managing unit 178.

The series of processing by the EPC host device 170 is controlled by the control unit 179. Although not illustrated, the control unit 179 is connected to the PDN GW communication unit 171, the base-station communication unit 172, the user-plane communication unit 173, the HeNBGW communication unit 174, and the control-plane control unit 175.

Some or all of the PDN GW communication unit 171, the base-station communication unit 172, the user-plane communication unit 173, the HeNBGW communication unit 174, the control-plane control unit 175, and the control unit 179 can be implemented by, for example, the memory 10 and the processor 11 such as a CPU that executes a program stored in the memory 10, as illustrated in FIG. 3A. Such programs may be provided over a network or may be recorded and provided on a recording medium. That is, such programs may be provided, for example, as a program product.

Some or all of the PDN GW communication unit 171, the base-station communication unit 172, the user-plane communication unit 173, the HeNBGW communication unit 174, the control-plane control unit 175, and the control unit 179 can also be implemented by, for example, a single circuit, a composite circuit, a processor ran by a program, a parallel processor ran by a program, a processing circuit 12 such as an ASIC or an FPGA, as illustrated in FIG. 3B.

As described above, the PDN GW communication unit 171, the base-station communication unit 172, the user-plane communication unit 173, the HeNBGW communication unit 174, the control-plane control unit 175, and the control unit 179 can be implemented by processing circuitry.

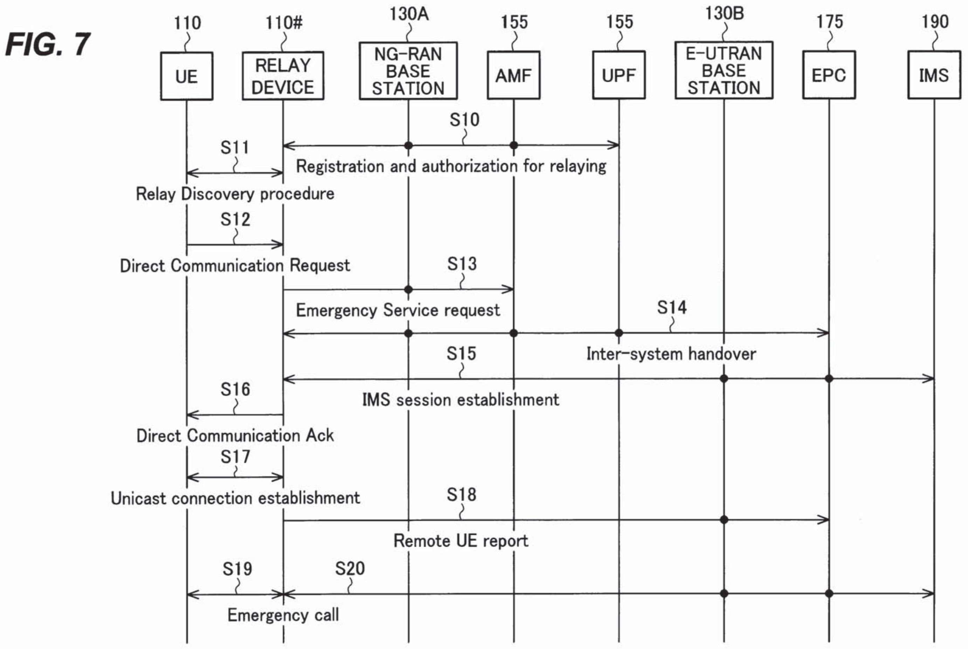

FIG. 7 is a sequence diagram illustrating the steps for performing the emergency service in the first embodiment.

First, the protocol processing unit 113# of the relay device 110#, which functions as a U2N relay, is connected to the 5GC host device 150, which constitutes a 5G core network, via the NG-RAN base station 130A, which constitutes the NG-RAN (step S10). At this time, the protocol processing unit 113# of the relay device 110# receives information on whether or not the emergency service and the emergency service fallback are supported, from the control-plane control unit 155 of the 5GC host device 150, which provides an access management function (AMF) and a UPF in the 5G core network. This allows the protocol processing unit 113# of the relay device 110# to recognize whether or not the emergency service is available for the connected base stations 130, whether or not handover (fallback) is necessary for the E-UTRAN of the host base station, or whether or not reconnection to another cell is necessary. In the explanation here, it is assumed that the protocol processing unit 113# of the relay device 110# recognizes that handover (fallback) to the E-UTRAN of the host base station is necessary.

Next, the protocol processing unit 113# of the relay device 110# announces that a relay service can be provided to nearby UEs 110 according to the procedures described in Relay Discovery mode A or B (step S11). At this time, the protocol processing unit 113# may add, to a Relay Discovery Solicitation message or a Relay Discovery Response message, information acquired in step S10 on whether or not the emergency service of the connected base stations 130 is available, whether or not handover to the E-UTRAN of the host base station is necessary, or whether or not reconnection to another cell is necessary.

Although not illustrated, the UE 110 that wants to use the emergency service first conducts a search to check if direct communication is possible with the base station providing the emergency service in the area. In the explanation here, it is assumed that there are no base stations providing the emergency service in the area.

If there are no base stations in the area providing the emergency service, the protocol processing unit 113 of the UE 110 searches for the U2N relay according to the procedures of Relay Discovery. In the explanation here, it is assumed that the relay device 110 # functioning as the U2N relay is found.

In this case, the protocol processing unit 113 of the UE 110 attempts to connect to the relay device 110# by transmitting a Direct Communication Request (step S12). At this time, on the basis of the information recognized in step S11, the protocol processing unit 113 may also select the U2N relay connected to a base station providing the emergency service or a base station where the emergency service is available through handover to the E-UTRAN, and transmit a Direct Communication Request to initiate communication. At this time, the protocol processing unit 113 of the UE 110 may add information indicating that the emergency service is to be used to the Direct Communication Request, to notify the U2N relay of this information.

Next, the protocol processing unit 113# of the relay device 110# that received the Direct Communication Request requests the 5GC host device 150, which provides an AMF to the 5G core network, to initiate an emergency service session (step S13).

Upon receiving a request to initiate the emergency service session, the control-plane control unit 155 of the 5GC host device 150 initiates a session corresponding to the emergency service, if the 5GC core network supports the emergency service. In the explanation here, it is assumed that the 5GC core network does not support the emergency service but supports fallback of the emergency service.

In such a case, the control-plane control unit 155 of the 5GC host device 150 causes the control-plane control unit 175 of the EPC host device 170 to perform handover to the E-UTRAN base station 130B constituting the E-UTRAN and initiate the session (step S14).

Next, the protocol processing unit 113# of the relay device 110# establishes the session with the IMS 190 via the E-UTRAN base station 130B subjected to handover and connects to an emergency call center such as eCall using the emergency service (step S15).

Next, when handover by fallback of the emergency service and session establishment with the IMS 190 are all successful, the protocol processing unit 113# of the relay device 110# transmits an acknowledgement (ACK) signal of Direct Communication to the UE 110 that wants to use the emergency service (step S16). If any of the above procedures fail, the protocol processing unit 113# of the relay device 110# may immediately transmit a negative acknowledgement (NACK) signal to the UE 110 at the time of failure, although this is not illustrated. The protocol processing unit 113# of the relay device 110# may also tentatively transmit an ACK signal through any of the above procedures to reduce the response time.

Next, the protocol processing unit 113 of the UE 110 that wants to use the emergency service establishes direct communication with the relay device 110# (step S17).

Next, the protocol processing unit 113# of the relay device 110# reports to the EPC host device 170 that the direct communication in step S17 and the relaying to the E-UTRAN base station 130B have succeeded (step S18). Tn the EPC host device 170, such a report is received by the control-plane control unit 175, which functions as an EPC.

Next, the AP unit 112 of the UE 110 initiates communication with the emergency call center via the relay device 110# (steps S19 and S20).

Through the above procedures, the UE 110 can perform emergency communication by fallback of the emergency service via the U2N relay.

The UE 110 can certainly initiate emergency communication by selecting the base station 130 that can use the emergency service or the base station 130 that can perform fallback of the emergency service.

Although the first embodiment describes fallback of the emergency service using a U2N relay, the first embodiment is not limited to such emergency service. Similarly, the first embodiment is applicable to services that support a fallback mechanism besides the emergency service.

### SECOND EMBODIMENT

The first embodiment describes an example in which the U2N relay is connected to the NG-RAN (5G core network) and fallback of the emergency service to the E-UTRAN is performed, if necessary; conversely, the emergency service may be handed over to the NG-RAN (5G core network) through fallback of the emergency service from the E-UTRAN. The second embodiment describes such an example.

In the second embodiment, a first network is an E-UTRAN and a second network is an NG-RAN. In the second embodiment, an E-UTRAN base station 130B is also referred to as "first base station," and an NG-RAN base station 130A is also referred to as "second base station."

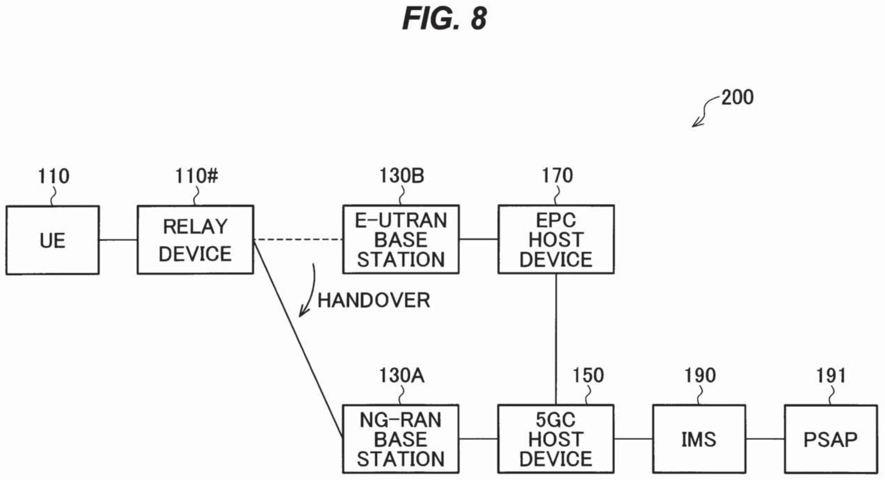

FIG. 8 is a block diagram schematically illustrating a configuration of a wireless communication system 200 according to the second embodiment.

The wireless communication system 200 includes a UE 110, a relay device 110#, an NG-RAN base station 130A, a 5GC host device 150, an E-UTRAN base station 130B, and an EPC host device 170.

The wireless communication system 200 is a system for receiving the emergency service from a PSAP 191 via an IMS 190.

In the wireless communication system 200 according to the second embodiment, although the E-UTRAN base station 130B and the EPC host device 170 do not support the emergency service, they get connected to the emergency service via the 5GC host device 150, which supports the emergency service.

The UE 110, the relay device 110#, the NG-RAN base station 130A, the 5GC host device 150, the E-UTRAN base station 130B, and the EPC host device 170 of the wireless communication system 200 according to the second embodiment respectively have the same configuration as the UE 110, the relay device 110#, the NG-RAN base station 130A, the 5GC host device 150, the E-UTRAN base station 130B, and the EPC host device 170 of the wireless communication system 100 according to the first embodiment.

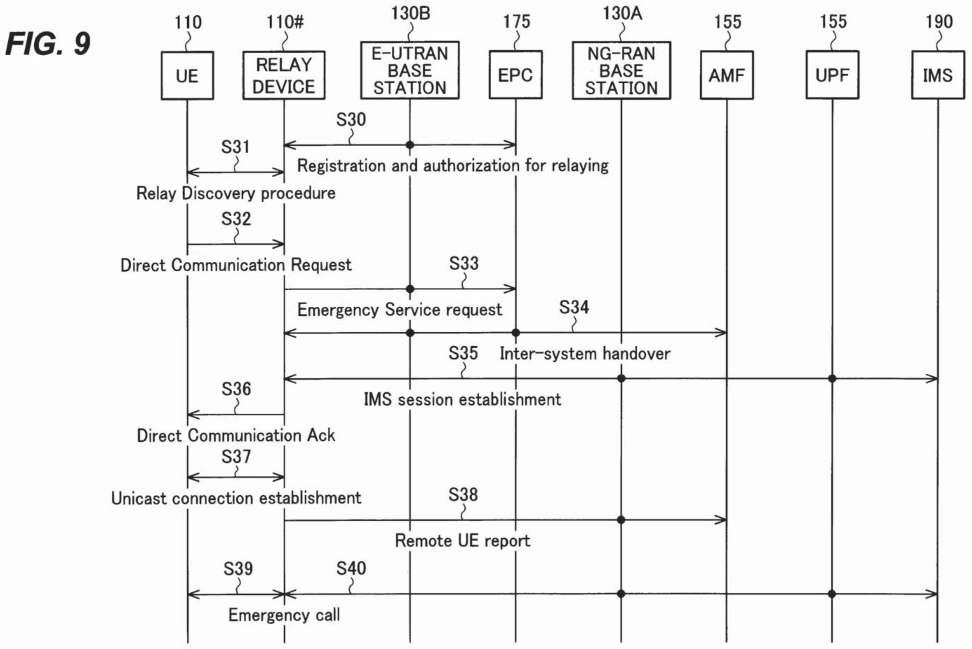

FIG. 9 is a sequence diagram illustrating the procedures for performing the emergency service in the second embodiment.

First, the protocol processing unit 113# of the relay device 110#, which functions as a U2N relay, is connected to the EPC host device 170 via the E-UTRAN base station 130B, which constitutes an E-UTRAN (step S30). At this time, the protocol processing unit 113# of the relay device 110# receives information on whether or not the emergency service is supported or emergency service fallback is supported from the control-plane control unit 175 of the EPC host device 170, which functions as an EPC in the E-UTRAN. This allows the protocol processing unit 113# of the relay device 110# to recognize whether or not the emergency service is available for the connected base stations 130, whether or not handover (fallback) to the NG-RAN of the host base station is necessary, or whether or not reconnection to another cell is necessary. In the explanation here, it is assumed that the protocol processing unit 113# of the relay device 110# recognizes that handover (fallback) to the NG-RAN of the host base station is necessary.

Next, the protocol processing unit 113# of the relay device 110# announces that relay service is available to nearby UEs 110 according to the procedures described in Relay Discovery mode A or B (step S31). At this time, the protocol processing unit 113# may add, to a Relay Discovery Solicitation message or a Relay Discovery Response message, information acquired in step S30 on whether or not the emergency service of the connected base stations 130 is available, whether or not handover to the NG-RAN of the host base station is necessary, or whether or not reconnection to another cell is necessary.

Although not illustrated, the UE 110 that wants to use the emergency service first conducts a search to check if direct communication is possible with the base station providing the emergency service in the area. In the explanation here, it is assumed that there are no base stations providing the emergency service in the area.

If there are no base stations in the area providing the emergency service, the protocol processing unit 113 of the UE 110 searches for the U2N relay according to the procedures of Relay Discovery. In the explanation here, it is assumed that the relay device 110# functioning as the U2N relay is found.

In this case, the protocol processing unit 113 of the UE 110 attempts to connect to the relay device 110# by transmitting a Direct Communication Request (step S32). At this time, on the basis of the information recognized in step S31, the protocol processing unit 113 may also select the U2N relay connected to a base station providing the emergency service or a base station where the emergency service is available through handover to the NG-RAN, and transmit a Direct Communication Request to initiate communication. At this time, the protocol processing unit 113 of the UE 110 may add information indicating that the emergency service is to be used to the Direct Communication Request, to notify the U2N relay of this information.

Next, the protocol processing unit 113# of the relay device 110# that received the Direct Communication Request requests the EPC host device 170, which functions as an EPC of the E-UTRAN, to initiate an emergency service session (step S33).

Upon receiving a request to initiate the emergency service session, the control-plane control unit 175 of the EPC host device 170 initiates a session corresponding to the emergency service, if the E-UTRAN supports the emergency service. In the explanation here, it is assumed that the E-UTRAN does not support the emergency service but supports fallback of the emergency service.

In such a case, the control-plane control unit 175 of the EPC host device 170 causes the control-plane control unit 155 of the 5GC host device 150 to perform handover to the NG-RAN base station 130A constituting the NG-RAN and initiate the session (step S34).

Next, the protocol processing unit 113# of the relay device 110# establishes the session with the IMS 190 via the NG-RAN base station 130A subjected to handover and connects to an emergency call center such as eCall using the emergency service (step S35).

Next, when handover by fallback of the emergency service and session establishment with the IMS 190 are all successful, the protocol processing unit 113# of the relay device 110# transmits an ACK signal of Direct Communication to the UE 110 that wants to use the emergency service (step S36). If any of the above procedures fail, the protocol processing unit 113# of the relay device 110# may immediately transmit a NACK signal to the UE 110 at the time of failure, although this is not illustrated. The protocol processing unit 113# of the relay device 110# may also tentatively transmit an ACK signal through any of the above procedures to reduce the response time.

Next, the protocol processing unit 113 of the UE 110 that wants to use the emergency service establishes direct communication with the relay device 110# (step S37).

Next, the protocol processing unit 113# of the relay device 110# reports to the 5GC host device 150 that the direct communication in step S37 and the relaying to the NG-RAN base station 130A have succeeded (step S38). In the 5GC host device 150, such a report is received by the control-plane control unit 155, which provides an AMF'.

Next, the AP unit 112 of the UE 110 initiates communication with the emergency call center via the relay device 110# (steps S39 and S40).

Through the above procedures, the UE 110 can perform emergency communication by fallback of the emergency service via the U2N relay.

The UE 110 can certainly initiate emergency communication by selecting the base station 130 that can use the emergency service or the base station 130 that can perform fallback of the emergency service.

### MODIFICATIONS

In the first and second embodiments, if the relay device 110# fails to fallback the emergency service and gives up the handover, the relay device 110# reconnects to the original base station 130 and transmits a NACK signal to the UE 110 that has requested relay communication of the emergency service, and the UE 110 attempts another connection method.

In this case, unlike a request for the emergency service by direct communication with a normal base station 130, the base station 130 and the network side cannot detect which UE 110 has requested the emergency service, i.e., who is in an emergency situation and where.

Accordingly, in a modification of the first and second embodiments, the protocol processing unit 113# of the relay device 110# notifies the first base station of identification information for identifying the UE 110 when a connection request to the emergency service is received from the UE 110 and the connection to the emergency service fails in the first network or when a connection request to the emergency service is received from the UE 110 and the handover to the second network fails.

More specifically, when the Direct Communication Request is transmitted in step S12 of FIG. 7 or step S32 of FIG. 9, the protocol processing unit 113# of the UE 110 may transmit terminal identification information, which is identification information for identifying the UE 110 to be requested, in addition to the information indicating that the emergency service is to be used. Here, as the terminal identification information, for example, Subscriber Identity Module (SIM) information or location information indicating the location of the UE 110 can be used.

Furthermore, in place of step S18 of FIG. 7 or step S38 of FIG. 9, the relay device 110# may report to the original base station 130 (the NG-RAN base station 130A in FIG. 7 and the E-UTRAN base station 130B in FIG. 9) that the handover has failed, and may also provide the terminal identification information acquired above.

Through the above method, the base station 130 and the network can specify the terminal in need of emergency call, even if the relay device 110# fails the fallback the emergency service.

### DESCRIPTION OF REFERENCE CHARACTERS

100, 200 wireless communication system; 110 UE; 111 terminal-side communications unit; 112 AP unit; 113 protocol processing unit; 114 control unit; 110# relay device; 111# terminal-side communication unit; 112# AP unit; 113# protocol processing unit; 114# control unit; 130A NG-RAN base station; 130B E-UTRAN base station; 131 station-side communication unit; 132 communication processing unit; 136 protocol processing unit; 137 control unit; 138 storage unit; 150 5GC host device; 151 data-network communication unit; 152 base-station communication unit; 153 user-plane communication unit; 154 session managing unit; 155 control-plane control unit; 159 control unit; 170 EPC host device; 171 PDN GW communication unit; 172 base-station communication unit; 173 user-plane communication unit; 174 HeNBGW communication unit; 175 control-plane control unit; 179 control unit; 190 IMS; 191 PSAP.

## Claims

1. A terminal device comprising:
a communication unit configured to relay communication of a relay target device to a first network or a second network, the relay target device being another terminal device, the first network being unable to use an emergency service but supporting fallback of the emergency service, the second network being a destination of fallback of the emergency service; and
a protocol processing unit configured to hand over the communication of the relay target device to the second network when a request to connect to the emergency service is received from the relay target device while the communication of the relay target device is being relayed to the first network.

2. The terminal device according to claim 1, wherein the protocol processing unit is configured to include, to a Relay Discovery Solicitation message or a Relay Discovery Response message to the relay target device, information indicating that the emergency service is available when the emergency service is available in the network to which the communication unit is connected or information indicating that handover is to be performed to use the emergency service when the emergency service is unavailable in the network to which the communication unit is connected and fallback of the emergency service is possible.

3. A terminal device comprising:
a communication unit configured to receive a Relay Discovery Solicitation message or a Relay Discovery Response message including information indicating that an emergency service is available when the emergency service is available in a network to which a relay device is connected, and receive a Relay Discovery Solicitation message or a Relay Discovery Response message including information indicating that handover is to be performed to use the emergency service when the emergency service is unavailable in the network to which the relay device is connected and fallback of the emergency service is possible, the relay device being another terminal device performing relaying; and
a protocol processing unit configured to receive the emergency service by being relayed to the network to which the relay device is connected when the emergency service is available in the network to which the relay device is connected and receive the emergency service by being relayed to another network by fallback of the emergency service when the fallback of the emergency service is possible in the network to which the relay device is connected.

4. The terminal device according to claim 3, wherein the protocol processing unit is configured to add information indicating that the emergency service is to be received to a Relay Discovery Request message.

5. A wireless communication system comprising:
a first base station configured to be unable to use emergency service but support fallback of the emergency service, the first base station being included in a first network;
a second base station included in a second network to which the emergency service falls back; and
a terminal device configured to perform relaying to the first base station and the second base station,
wherein the terminal device comprises:
a communication unit configured to relay communication of a relay target device to the first base station or the second base station, the relay target device being another terminal device; and
a protocol processing unit configured to hand over the communication of the relay target device to the second network when a request to connect to the emergency service is received from the relay target device via the communication unit while the communication of the relay target device is being relayed to the first network.

6. The wireless communication system according to claim 5, wherein the protocol processing unit is configured to include, to a Relay Discovery Solicitation message or a Relay Discovery Response message to the relay target device, information indicating that the emergency service is available when the emergency service is available in the network to which the communication unit is connected or information indicating that handover is to be performed to use the emergency service when the emergency service is unavailable in the network to which the communication unit is connected and fallback of the emergency service is possible.

7. The wireless communication system according to claim 5 or 6, wherein the protocol processing unit is configured to notify the first base station of identification information for identifying the relay target device when the protocol processing unit receives a request from the relay target device to connect to the emergency service and fails to connect to the emergency service in the first network or when the protocol processing unit receives a request from the relay target device to connect to the emergency service and fails handover to the second network.

8. A relaying method comprising:
receiving a request from a relay target device to connect to an emergency service when communication of the relay target device is being relayed to a first network, the first network being unable to use the emergency service but supporting fallback to the emergency service; and
handing over the communication of the relay target device to a second network to which the emergency service falls back.

9. A relaying method comprising:
receiving a Relay Discovery Solicitation message or a Relay Discovery Response message including information indicating that an emergency service is available when the emergency service is available in a network to which a relay device is connected, the relay device being another terminal device performing relaying;
receiving a Relay Discovery Solicitation message or a Relay Discovery Response message including information indicating that handover is necessary to use the emergency service when the emergency service is unavailable in the network to which the relay device is connected and fallback of the emergency service is possible;
receiving the emergency service by being relayed to the network to which the relay device is connected when the emergency service is available in the network to which the relay device is connected; and
receiving the emergency service by being relayed to another network by fallback of the emergency service when the fallback of the emergency service is possible in the network to which the relay device is connected.
